# EUROPÄISCHE PATENTSCHRIFT

(11) **EP 0 891 495 B1**
(45) Veröffentlichungstag und Bekanntmachung des Hinweises auf die Patenterteilung: **06.08.2003**
(21) Anmeldenummer: 98910615.8
(22) Anmeldetag: 02.02.1998
(51) Int. Cl.: F16B 43/00, E06B 1/60, E04D 12/00

(54) **HÖHENAUSGLEICHELEMENT**
HEIGHT-ADJUSTING ELEMENT
ELEMENT DE REGLAGE DE HAUTEUR

(30) Priorität: 05.02.1997 DE 29702718 U
(43) Veröffentlichungstag der Anmeldung: 20.01.1999
(73) Patentinhaber: Rathsack, Wolfgang, 17213 Strietfeld (DE)
(72) Erfinder: Rathsack, Wolfgang, 17213 Strietfeld (DE)
(74) Vertreter: COHAUSZ DAWIDOWICZ HANNIG & PARTNER
(86) Internationale Anmeldenummer: DE9800388
(87) Internationale Veröffentlichungsnummer: WO98035164

(56) Entgegenhaltungen:
- EP-A- 0 127 021
- EP-A- 0 171 545
- EP-A- 0 719 953
- DE-U- 7 921 065
- DE-U- 9 304 706
- FR-A- 2 607 548
- FR-A- 2 643 104
- GB-A- 2 255 999
- US-A- 4 908 245

## Beschreibung

Die Erfindung betrifft ein Höhenausgleichelement, insbesondere für Holz-, Metall- und Baukonstruktionen u. dgl., mit einem keilflächigen Abschnitt aus Kunststoff, Holz oder Metall, der von einem Einführschlitz durchbrochen ist und der an seiner unteren Innenkante elastische Haltevorsprünge trägt, die einander gegenüberliegend in den Einführschlitz senkrecht hineinragend angeordnet sind, wobei die den Einführschlitz begrenzenden Schenkel des keilflächigen Abschnittes innenseitig eine nach außen geöffnete Anschrägung als Einführhilfe aufweisen und an der Oberseite und Unterseite des Abschnittes ein- bzw. angeformte Führungs- und Rastmittel vorgesehen sind, welche aus in Lage und Form zueinander passenden Führungspaaren wie Feder - Führungsnut und Rastzahnreihe - Führungsnut bestehen, und im keilflächigen Abschnitt eine Vertiefung vorgesehen ist.

Aus der EP 0 127 021 A2 ist eine für den Fensterbau, Innenausbau und für Dachdeckungen geneigte plattenförmige Distanzscheibe bekannt, die einen einseitig offenen Schlitz aufweist, der sich von seinem offenen Schlitzanfang bis über den Plattenmittelpunkt hinaus erstreckt und mit seinem Schlitzende eine Befestigungsschraube o. dgl. klemmfrei umgibt.

Die Distanzscheibe besteht aus Kunststoff und hat mindestens einen elastischen Haltevorsprung, der in den Schlitz hineinragt und mit die Klemmfreiheit der Befestigungsschraube gewährenden Abstand vor dem Schlitzende angeordnet ist.

Bekannt ist auch eine Ausgleichsplatte zum Hinterfüttern von Lattungen (DE-G 88 08 202.4 U1), die aus einem Kunststoffkörper mit einer Vorderseite und Rückseite und einer Öffnung für eine Befestigungsschraube besteht. Der Kunststoffkörper ist kreisförmig ausgebildet, besitzt Keilform und hat einen Schlitz. Mindestens eine Seite des Körpers ist außerdem mit einer Profilierung versehen.

Ferner sind aus der DE-G 87 01 267.7 U1, US-PS 2 094 779, US-PS 4 892 435 oder der FR 2 181 245 Ausgleichelemente bekannt, die eine keilförmige Form besitzen und immer nur paarweise verwendbar sind, um eine planparallele Auflage der Dachschalung auf den Dachträgern zu ermöglichen.

Nach der EP 0 719 953 A2 ist außerdem eine Vorrichtung zum Höhenausgleich von Bauelementen aus einem Zuschnitt aus Kunststoff, Holz o. dgl. bekannt, der als Keil ausgebildet ist. Der Keil besteht aus einem planparallelen flächigen Zuschnitt mit einseitig angeformtem Endabschnitt. In dem Zuschnitt ist eine den keilförmigen Endabschnitt und einen Teil des flächigen Abschnitts durchtrennende nutförmige Durchbrechung ausgebildet.

Ferner beschreibt die DE-G 83 22 420.3 ein Distanzelement zur Anwendung beim Befestigen von Ausbauteilen wie Lattenunterkonstruktionen, Wandplatten, Möbeln o. dgl. mittelbar oder unmittelbar an Anbauteilen wie z.B. der Raumbegrenzungsfläche eines Bauwerkes. Es besteht aus einem zwischen Ausbauteil und Anbauteil eingebrachten Plättchen, das für das Verbindungselement eine Ausklinkung aufweist. Das bekannte Distanzelement hat an seinen Oberflächen Verbindungselemente wie Einstechspitzen oder Erhöhungen beispielsweise Noppen, Spitzen und formschlüssig passende Vertiefungen.
Diese Einstechspitzen oder die Erhöhungen an den Auflageflächen ermöglichen zwar ein Stapeln der Distanzelemente mit hoher Haftreibung der einzelnen Elemente untereinander, führen aber beim Einschlagen zwischen Lattung und Dachträger oder beim Nachsetzen zur Zerstörung bzw. Verwerfung.
Dieses Distanzelement ist deshalb für den Ausgleich von großen Höhenunterschieden wie sie zwischen Dachlattung und Dachträger auftreten, vollkommen ungeeignet.

In der EP 0 171 545 A1 ist ein Ausgleichkeil zur Distanzüberbrückung im Bau aus Spritzkunststoff mit zwei unter dem keilwinkel angeordneten Keilflächen beschrieben, die von einem Längsschlitz durchbrochen sind, der sich über mindestens die Hälfte der keilfläche erstreckt. Der Längsschlitz ist am spitzen Ende des Keiles offen. Die Öffnungsweite unterschreitet dabei die Schlitzbreite, wobei die Öffnungsweite durch Vorsprünge der Keilschenkel begrenzt sind.Auf der oberen Keilfläche sind Stege angeordnet, die von der Keilspitze bis zum Keilende durchlaufen und mittig auf den Keilschenkeln angeordnet sind. In der unteren Keilfläche sind Nuten angeordnet, die ebenfalls von der Keilspitze bis zum Keilenede durchlaufen. Die Nuten befinden sich unterhalb der Stege.

Allen diesen bekannten Lösungen ist der Nachteil gemeinsam, dass die Ausgleichelemente beim Einschlagen in den auszugleichenden Raum, beispielsweise zwischen Schalbrett und Dachträger, seitlich ausbrechen und insbesondere beim Nachsetzen der Ausgleichelemente ein Verrutschen infolge der Lockerung der Vernagelung von Schalbrett und Dachnägel nicht auszuschließen ist.
Außerdem besteht der Nachteil darin, dass die bekannten Ausgleichelemente nicht in unterschiedlicher Höhe kombinierbar sind, um verschiedene Höhendifferenzen auszugleichen. Dies führt nach wie vor zu hohem Zeit- und Materialaufwand, beispielsweise bei Dachdeckerarbeiten.

In Kenntnis der Nachteile dieses Standes der Technik liegt der Erfindung die Aufgabe zugrunde, ein Höhenausgleichelement der eingangs genannten Art zur Verfügung zu stellen, das ein seitliches Ausbrechen und Verrutschen beim Einschlagen der Höhenausgleichelemente bei einfacher Handhabe für unterschiedliche auszugleichende Zwischenräume sicher verhindert.

Dies wird mit dem Ausgleichelement der eingangs genannten Art erfindungsgemäß dadurch gelöst, dass an dem keilflächigen Abschnitt eine planparallele flächige Platte vorhanden ist, in der Führungs- und Rastmittel so angeordnet sind, dass die Elemente übereinander stapelbar, einschlagund nachsetzbar sind, wobei sie dazu alternierend auf Oberseite und Unterseite der planparallelen Platte angeordnet sind, d.h. sich Feder, Führungsnut, Rastzabnreihe auf der Oberseite und Rastzahnreihe, Führungsnut, Feder auf der Unterseite alternierend abwechseln, und dass in der planparallelen Platte Vertiefungen mit stabilisierenden Stegen sowie auf dem keilflächigen Abschnittes mindestens zwei parallel nebeneinanderliegende Federn gegen ein Auseinandertreiben beim Einschlagen bzw. Nachsetzen angeordnet sind.

In einer bevorzugten Ausgestaltung der Erfindung sind die Feder, Führungsnut und Rastzahnreihe auf und in der Oberseite sowie auf und in der Unterseite gegeneinander vertauschbar angeordnet sind.
Es ist nach der Erfindung beispielsweise ohne weiteres möglich, die Feder von Oberseite auf die Unterseite und die dazu passende Führungsnut von der Unterseite auf die Oberseite zu verlegen, also ihre Lage einfach zu vertauschen.

In bevorzugter weiterer Ausgestaltung der Erfindung ist an der Oberseite des Höhenausgleichelementes nahe und entlang seiner oberen Außenkante über die Oberseite teilweise verlaufend mindestens die Feder, nahe und entlang der anderen oberen Außenkante mindestens die in die Oberseite vollständig eingeformte Führungsnut, nahe und entlang der inneren oberen Kante des Schenkels mindestens eine die Oberseite durchlaufende Führungsnut mit mindestens einem darin angeordneten Rastzahn und nahe der anderen inneren oberen Kante des Schenkels eine Rastzahnreihe angeordnet, wobei an der Unterseite des Höhenausgleichelementes anstelle der Feder eine Führungsnut, anstelle der Führungsnut eine Feder, anstelle der Führungsnut eine Rastverzahnung eine Führungsnut und anstelle der Rastverzahnung eine Führungsnut angeordnet sind.

Diese wechselseitige Anordnung von Feder und Nut auf der Ober- und Unterseite des erfindungsgemäßen Höhenausgleichelementes gewährleistet einerseits beim Einschlagen und Nachsetzen, dass ein seitliches Ausbrechen oder ein Verrutschen verhindert wird und andererseits ermöglichst diese Anordnung ein Übereinanderstapeln von erfindungsgemäßen Höhenausgleichelementen mit unterschiedlichem Höhenmaß, ohne dasssich die Vernagelung der Schalbretter auf den Trägern nachhaltig lockert.
Die auf der Keilfläche der Schenkel ausgebildeten zwei Federn ermöglichen eine sichere seitliche Führung beim Einschlagen und Nachsetzen.

Nach einer weiteren bevorzugten Ausgestaltung des erfindungsgemäßen Ausgleichelementes hat sich eine Anschrägung α von 3 bis 10°, vorzugsweise 5°, als besonders geeignet erwiesen.
Diese Anschrägung, die vorzugsweise auch trichterförmig ausgebildet sein kann, gestattet das problemlose Auffinden des das Schalbrett und den Träger verbindenden Nagels beim Einschlagen des erfindungsgemäßen Höhenausgleichelementes in die auszugleichende Lücke, beispielsweise zwischen Schalbrett und Träger.

In einer weiteren Ausgestaltung des erfindungsgemäßen Ausgleichelementes ist die Breite der Führungsnut etwas breiter gewählt als die Breite der Feder. Da die Feder sich nicht über die gesamte Länge der planparallelen Platte erstreckt, dagegen die auf der Unterseite des Ausgleichelementes angeordnete Führungsnut jedoch über die gesamte Unterseite verläuft, ist auch beim nachträglichen Einschlagen eines weiteren Höhenausgleichelementes über einem in der Lücke bereits befindlichen Höhenausgleichelement eine sichere Führung ohne Verrutschen gewährleistet.
Es muß lediglich gesichert bleiben, dass die Feder in der Führungsnut zu liegen kommt.

Um unterschiedliche Höhen ausgleichen zu können, besitzt die planparallele Platte nach einer Ausgestaltung des erfindungsgemäßen Höhenausgleichelementes eine frei vorwählbare Höhenrasterung.

Für eine Feinrasterung , beispielsweise im Trockenbau, hat sich eine Abstufung von Höhenausgleichelement zu Höhenausgleichelement von mindestens 1,5 mm als vorteilhaft erwiesen.

Die Höhenrasterung für die etwas gröberen Dachdeckerarbeiten beträgt in der Abstufung nach einer weiteren vorteilhaften Ausgestaltung der Erfindung wenigstens 3,0 mm.

Natürlich kann auch eine andere Höhenrasterung gewählt werden, wenn es beispielsweise im Metallbau bei Baukonstruktionen notwendig ist.

Mit dieser Rasterung ist eine Kombination von erfindungsgemäßen Höhenausgleichelementen in unterschiedlicher Höhe je nach den Erfordernissen bei Holz-, Metall- und Baukonstruktionen u. dgl., beispielsweise beim Dachdecken, Trockenbau oder Fassadenbau, bei Fußboden- oder Dielungsarbeiten im Alt- und Neubau, problemlos möglich.

Um diese Kombination zu vereinfachen, sind die Höhenausgleichelemente gleicher Höhenrasterung mit einer gleichen Grundfarbe, beispielsweise weiß 3,00 mm, gelb 4,5 mm, grün 7,5 mm und dunkelgrün 13,5 mm, gekennzeichnet.

In einer bevorzugten Ausführungsform besteht das erfindungsgemäße Höhenausgleichelement aus Kunststoff hoher Festigkeit, vorzugsweise Polyethylen, Polypropylen, Polyamid, oder aus Metall, vorzugsweise Aluminium, oder aus Hartholz.

Um ein seitliches Auseinandertreiben der Schenkel beim Einschlagen zu vermeiden, sind in der planparallelen Platte und/oder im keilförmigen Abschnitt stabilitätserhöhende Stege und Vertiefungen vorhanden.

Natürlich gehört es auch zu der Erfindung, wenn die planparallele Platte mehr als zwei Schenkel besitzt.
Dies kann dann erforderlich sein, wenn die Vernagelung sehr nahe beieinander liegt.
Aus all dem läßt sich der Vorteil der hohen Flexibilität und Variabilität des erfindungsgemäßen Höhenausgleichelement bei Dachdeckerarbeiten und im Trocken- und Fassadenbau erkennen.

Weitere Vorteile und Einzelheiten ergeben sich aus der nachfolgenden Beschreibung eines bevorzugten Ausführungsbeispieles unter Bezugnahme auf die beigefügten Zeichnungen.

Es zeigen im einzelnen:
- Fig. 1: eine Draufsicht des erfindungsgemäßen Höhenausgleichelementes,
- Fig. 2: eine perspektivische Ansicht der planparallelen Platte des erfindungsgemäßen Höhenausgleichelementes mit abgeschnittenem keilflächigen Abschnitt,

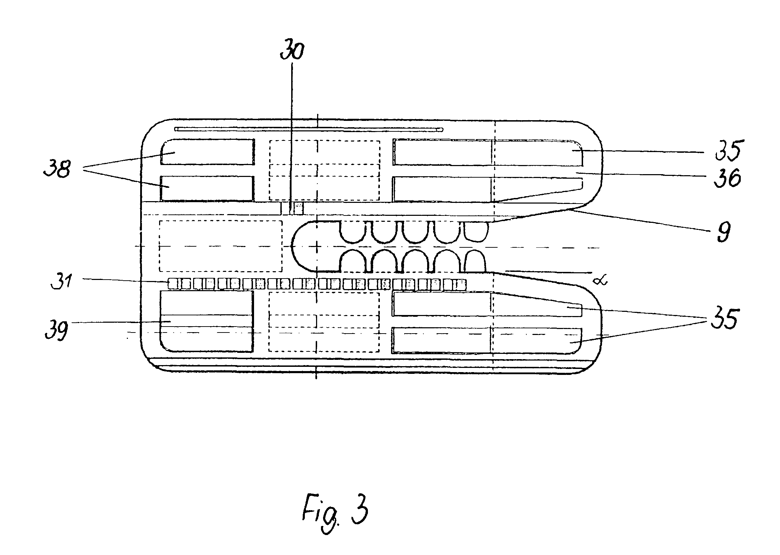

- Fig. 3: eine Ansicht der Unterseite des erfindungsgemäßen Höhenausgleichelementes mit Verstärkungsstegen,
- Fig. 4: eine Darstellung von Feder, Führungsnut und Rastzahnreihe im Schnitt A-A gemäß Fig.1 und
- Fig. 5: eine Seitenansicht im Schnitt B-B gemäß Fig. 1.

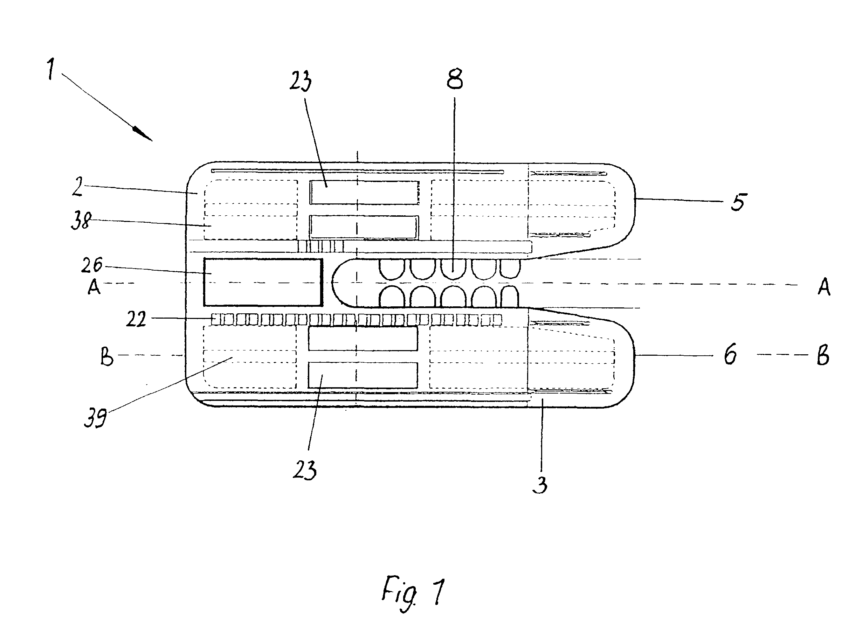

Das in Figur 1 dargestellte erfindungsgemäße Höhenausgleichelement **1** besteht aus einer planparallelen Platte **2** und einem daran stoffschlüssig angeformten Abschnitt **3.** Bis in die Platte **2** reicht ein Einführschlitz **4,** der die Platte **2** und den Abschnitt **3** in zwei Schenkel **5** und **6** teilt.

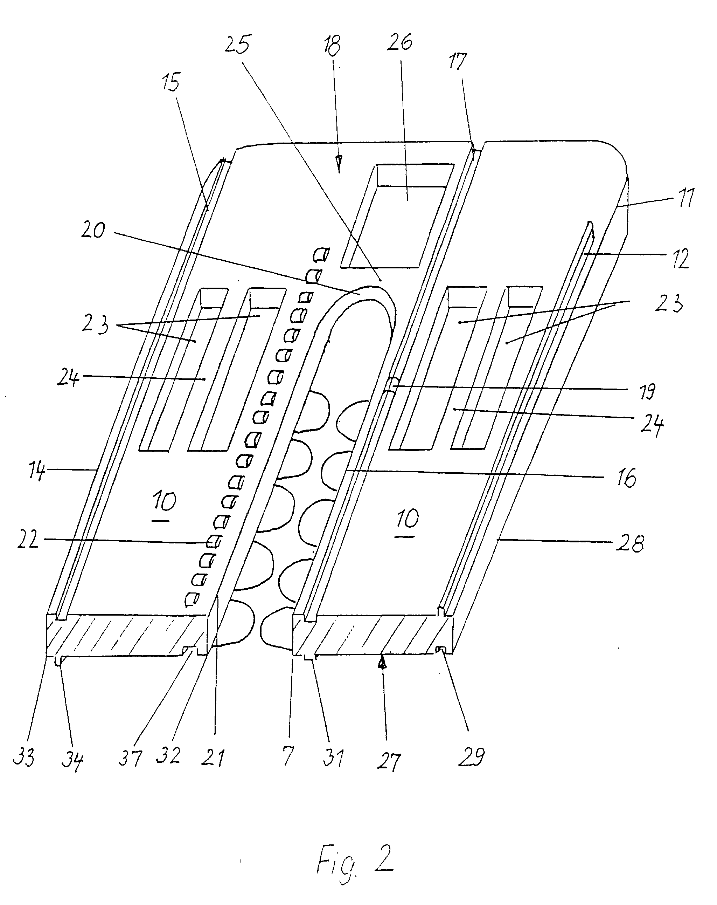

An der unteren Innenkante **7** des Schenkels **5** des Einführschlitzes **4** sind elastische Haltevorsprünge **8** angeformt, die einander gegenüber angeordnet in den Einführschlitz **4** senkrecht abstehend hineinragen. Diese Haltevorsprünge **8** klemmen sich beim Einschlagen an den zwischen Schalbrett und Träger befindlichen Nagel fest, so dass ein Herausfallen verhindert wird.
Die beiden Schenkel **5** und **6** des Abschnittes **3** sind keilflächenartig ausgebildet und besitzen eine trichterartige, sich in Schlitzrichtung verjüngende Anschrägung **9,** die ein lagegenaues Erfassen des Nagels durch den Einführschlitz **4** erleichert. Der Öffnungswinkel α beträgt 3°.
An der Oberseite **10** des Höhenausgleichelementes **1** ist wie in Figur 2 gezeigt nahe und entlang seiner Außenkante **11** verlaufend eine Feder **12** angeformt, die einerseits bis in die Keilfläche **13** des Abschnittes **3** hineinreicht, jedoch andererseits nur teilweise über die gesamte Oberfläche **10** der planparallelen Platte **2** verläuft. Dies stellt sicher, dass die Feder **12** beim Einschlagen nicht verformt wird und als Führungsorgan nutzbar bleibt. Nahe und entlang der anderen oberen Außenkante **14** des Höhenausgleichelementes **1** ist eine obere Führungsnut **15** in die Oberseite **10** eingearbeitet, deren Breite **B** etwas breiter ist als die Breite der Feder **12.** Die Führungsnut **15** reicht ebenfalls bis in die Keilfläche **13** des Abschnittes **3** hinein.

Nahe und entlang der oberen Innenkante **16** des Schenkels **5** verläuft eine obere Führungsnut **17,** die in die Oberseite **10** des Höhenausgleichelementes **1** bis in den Stirnbereich **18** durchlaufend eingeformt ist.

In dieser Führungsnut **17** befindet sich ein einziger Rastzahn **19,** der etwa in Höhe des Schlitzgrundes **20** gelegen ist und sich vom Nutgrund abhebt.
Unmittelbar an der oberen Innenkante **21** des gegenüberliegenden anderen Schenkels **6** ist eine Rastzahnreihe **22** an der Oberseite **10** des Höhenausgleichelementes **1** angeformt, die einerseits bis zur Keilfläche **13** des Abschnitts **3** reicht, andererseits aber die Oberseite **10** nur teilweise bedeckt.
Ausgehend von der Außenkante **11** an der Oberseite **10** des Höhenausgleichelementes **1** ergibt sich somit die Reihenfolge Feder-Führungsnut-Rastzahnreihe-Führungsnut.
In beiden Schenkeln **5** und **6** ist eine obere Vertiefung **23** eingearbeitet, die durch in Einschlagrichtung verlaufende Stege **24** verstärkt sind. Der Schlitzgrund **20** stützt sich auf einem Steg **25** einer Vertiefung **26** ab, die in den Stirnbereich **18** eingeformt ist und etwa die Breite des Einführungsschlitzes **4** aufweist.

In der Unterseite **27** des erfindungsgemäßen Höhenausgleichelementes **1** befindet sich nahe und entlang an der der Außenkante **11** gegenüberliegenden unteren Kante **28** eine in Form und Lage adäquate Führungsnut **29,** die die gesamte Unterseite **27** durchsetzt (siehe Fig. 2).
Nahe und entlang der unteren Innenkante **7** des Schenkels **5** ist eine in Größe und Form der Rastzahnreihe **22** der Oberseite **10** entsprechend adäquate Rastzahnreihe **31** an der Unterseite **27** angeformt.
Somit liegen die Rastzahnreihe **31** an der Unterseite **27** und die Führungsnut **17** in der Oberseite **10** lagegerecht senkrecht übereinander, ebenso wie die Feder **12** an der Oberseite **10** und die Führungsnut **29** in der Unterseite **27.**
Nahe und entlang der anderen unteren Innenkante **32** des Schenkels **6** ist in der Unterseite **27** eine Führungsnut **37** ausgebildet, die senkrecht über der an der Oberseite **10** angeformten Rastzahnreihe **22** angeordnet ist. Diese Führungsnut **37** besitzt genauso wie die Führungsnut **17** einen Rastzahn **30.**
Nahe und entlang der unteren Außenkante **33** des Höhenausgleichelementes **1** ist an der Unterseite **27** folgerichtig eine weitere Feder **34** angeformt, der auf der Oberseite **10** die entsprechende Führungsnut **15** zugeordnet ist.

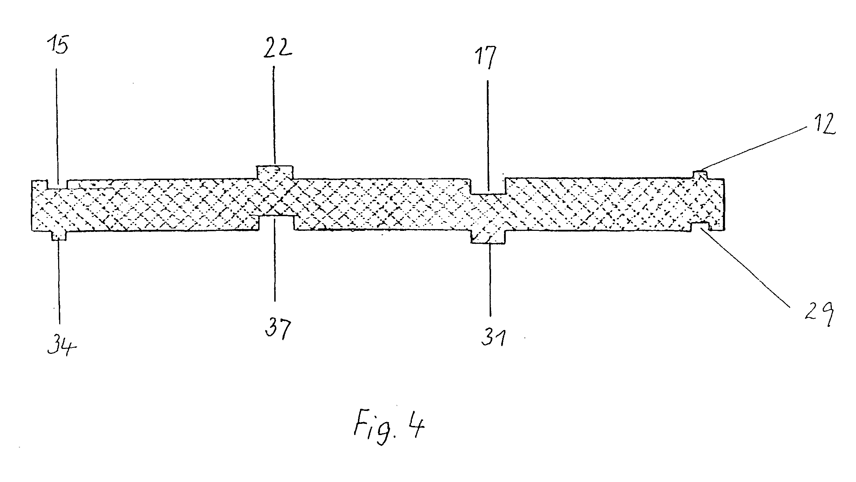

Figur 4 zeigt einen Schnitt entsprechend der Schnittlinie A-A der Fig. 1, aus der die Lage der Führungspaare auf und in der Oberseite **10** sowie auf und in der Unterseite **27** zu erkennen ist.
Der Feder **12** an der Oberseite **10** liegt die Führungsnut **29,** der Führungsnut **17** in der Oberseite **10** liegt die Rastzahnreihe **31** an der Unterseite **27,** der Rastzahnreihe **22** liegt die Führungsnut **37** und der Führungsnut **15** liegt die Feder **34** an der Unterseite **27** jeweils lagegerecht gegenüber.

Dies ermöglicht das weitgehend rutschsichere Aufeinanderstapeln der erfindungsgemäßen Höhenausgleichelemente **1** in einer auszugleichenden Lücke zwischen Dachschalung und Träger, so dass die Höhenausgleichelemente **1** mit unterschiedlichen Rasterhöhen **H** miteinander kombiniert werden können. Somit ist es für den Dachdecker problemlos möglich, die erforderliche Höhenrasterung entsprechend den Bedingungen vor Ort zu wählen. Das Zusammensetzen der erfindungsgemäßen Höhenausgleichelemente **1** wird durch die farbliche Kennzeichnung gleicher Höhenrasterung einfach.

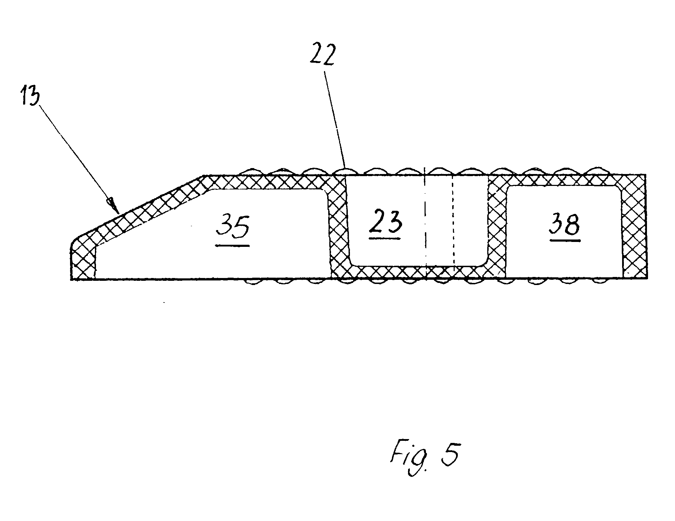

Die Federn **12** und **34** verhindern beim Einschlagen der Höhenausgleichelemente **1** in die auszugleichende Lücke ein Verrutschen und die Rastzahnreihen gewährleisten auch ein Nachsetzen der Höhenausgleichelemente.
Unterstützt wird dies durch auf der Keilfläche **13** liegende unterschiedlich lange Federn **40,** die ebenfalls nahe der Außen- und Innenkante der beiden Schenkel **5** und **6** in Einschlagrichtung verlaufen. Beim Einschlagen greifen zunächst die Federn **40** und dringen in das umliegende Holz, beispielsweise der Schalung, ein, so dass die Schenkel **5** und **6** auch seitlich geführt sind, bevor die Federn **12** und **34** der planparallelen Platte **2** zum Eingriff gelangen.
In die Unterseite **27** der beiden Schenkel **5** und **6** sind längliche Vertiefungen **35** eingeformt, die durch in den Vertiefungen angeordnete Stege **36** verstärkt sind. Die Stege **36** verlaufen in Einschlagrichtung, d.h. in Längsrichtung der beiden Schenkel (Fig. 5). Sie wirken einer Deformation und einem Auseinandertreiben der beiden Schenkel beim Einschlagen und Nachsetzen entgegen, ebenso wie die beiden unteren Vertiefungen **38** mit ihren Stegen **39** im Stirnbereich 18 in der Unterseite **27** der planparallelen Platte **2.**

### Aufstellung der verwendeten Bezugszeichen

- Höhenausgleichelement: 1
- planparallele Platte: 2
- keilflächiger Abschnitt: 3
- Einführschlitz: 4
- Schenkel: 5, 6
- untere Innenkante des Schenkels 5: 7
- elastische Haltevorsprünge: 8
- Anschrägung: 9
- Oberseite des Höhenausgleichelementes: 10
- obere Außenkante des Höhenausgleichelementes: 11
- Feder: 12
- Keilfläche des Abschnittes: 13
- obere Außenkante des Höhenausgleichelementes: 14
- obere Führungsnut in der Oberseite (Schenkel 6): 15
- obere Innenkante des Schenkels 5: 16
- obere Führungsnut in der Oberseite (Schenkel 6): 17
- Stirnbereich des Höhenausgleichelementes: 18
- Rastzahn in der Führungsnut 17: 19
- Schlitzgrund: 20
- obere Innenkante des Schenkels 6: 21
- Rastzahnreihe an der Oberseite 10: 22
- obere Vertiefung in den Schenkeln 5 u. 6: 23
- Stege in der Vertiefung: 24
- Steg in der Vertiefung: 25
- Vertiefung im Stirnbereich 18: 26
- Unterseite des Höhenausgleichelementes: 27
- untere Außenkante des Höhenausgleichelementes: 28
- Führungsnut in der Unterseite (Schenkel 5): 29
- Rasterzahn in der Führungsnut 37: 30
- Rastzahnreihe an der Unterseite (Schenkel 5): 31
- untere Innenkante des Schenkels 6: 32
- untere Außenkante des Höhenausgleichelementes: 33
- untere Feder an der Unterseite (Schenkel 6): 34
- untere Vertiefung in den Schenkeln 5 u. 6: 35
- Stege: 36
- Führungsnut in der Unterseite 27 (Schenkel 6): 37
- untere Vertiefung: 38
- Stege in unterer Vertiefung: 39
- Feder: 40
- Breite der Führungsnut: B
- Höhenrasterung: H

## Patentansprüche

1. Höhenausgleichelement (1), insbesondere für Holz-, Metall- und Baukonstruktionen u. dgl., mit einem keilflächigen Abschnitt (3) aus Kunststoff, Holz oder Metall, der von einem Einführschlitz (4) durchbrochen ist und der an seiner unteren Innenkante elastische Haltevorsprünge (8) trägt, die einander gegenüberliegend in den Einführschlitz (4) senkrecht hineinragend angeordnet sind, wobei die den Einführschlitz begrenzenden Schenkel (5,6) des keilflächigen Abschnittes (3) innenseitig eine nach außen geöffnete Anschrägung (9) als Einführhilfe aufweisen und an der Oberseite und Unterseite des Abschnittes ein- bzw. angeformte Führungs- und Rastmittel vorgesehen sind, welche aus in Lage und Form zueinander passenden Führungspaaren wie Feder (12,34) - Führungsnut (15,17,29) und Rastzahnreihe (22,31) - Führungsnut (17,37) bestehen, und im keilflächigen Abschnitt (3) eine Vertiefung (35) vorgesehen ist, **dadurch gekennzeichnet, dass** an dem keilflächigen Abschnitt **(3)** eine planparallele flächige Platte **(2)** vorhanden ist, und dass die Führungs- und Rastmittel in der planparallen Platte **(2)** so angeordnet sind, dass die Elemente übereinander stapelbar, einschlagund nachsetzbar sind, wobei sie dazu alternierend auf Oberseite und Unterseite der planparallelen Platte **(2)** angeordnet sind, d.h. sich Feder **(12;34),** Führungsnut **(15;29)**, Rastzahnreihe **(22;31)** auf der Oberseite und Rastzahnreihe **(22;31),** Führungsnut **(15;29),** Feder **(12;34)** auf der Unterseite alternierend abwechseln, und dass in der planparallelen Platte **(2)** Vertiefungen **(23;35)** mit stabilisierenden Stegen **(24;25;37)** sowie auf der Keilfläche **(13)** des Abschnittes **(3)** mindestens zwei parallel nebeneinanderliegende Federn **(40)** gegen ein Auseinandertreiben beim Einschlagen bzw. Nachsetzen angeordnet sind.

2. Höhenausgleichelement Anspruch 1, **dadurch gekennzeichnet, dass** die Feder **(12;34),** Führungsnut **(15;29)** und Rastzahnreiehe **(22;31)** auf und in der Oberseite sowie auf und in der Unterseite gegeneinander vertauschbar angeordnet sind.

3. Höhenausgleichelement nach Anspruch 1 und 2, **dadurch gekennzeichnet, dass** an der Oberseite **(10)** der Platte **(2)** nahe und entlang seiner oberen Außenkante **(11)** über die Oberseite teilweise verlaufend mindestens die Feder **(12),** nahe und entlang der anderen oberen Außenkante **(14)** mindestens die in die Oberfläche **(10)** vollständig eingeformte Führungsnut **(15),** nahe und entlang der inneren oberen Kante **(16)** des Schenkels **(5)** mindestens eine die Oberseite **(10)** durchlaufende Führungsnut **(17)** mit mindestens einem darin angeordneten Rastzahn **(19)** und nahe und entlang der anderen inneren oberen Kante **(21)** des Schenkels **(6)** die Rastzahnreihe **(22)** angeordnet ist, und dass an der Unterseite **(27)** des Höhenausgleichelementes anstelle der Feder **(12)** eine Führungsnut **(29),** anstelle der Führungsnut **(15)** eine Feder **(34),** anstelle der Führungsnut **(17)** eine Rastverzahnung **(31)** und anstelle der Rastverzahnung **(22)** eine Führungsnut **(37)** in gleicher Lage und Richtung angeordnet sind.

4. Höhenausgleichelement nach Anspruch 1 bis 3, **dadurch gekennzeichnet, dass** die Federn **(40)** auf der Keilfläche **(13)** der Schenkel **(5;6)** unterschiedlich lang ausgebildet sind.

5. Höhenausgleichelement nach einem der vorherigen Ansprüche, **dadurch gekennzeichnet, dass** die Anschrägung **(9)** einen Öffnungswinkel α von 3 bis 10°, vorzugsweise 5°, aufweist.

6. Höhenausgleichelement nach einem der vorherigen Ansprüche, **dadurch gekennzeichnet, dass** die Anschrägung **(9)** trichterförmig ausgebildet ist.

7. Höhenausgleichelement nach Anspruch 3, **dadurch gekennzeichnet, dass** die Breite **(b)** der Führungsnut **(15;29)** etwas breiter ist als die der Feder **(12;34).**

8. Höhenausgleichelement einem der vorherigen Ansprüche, **dadurch gekennzeichnet, dass** die Höhe **(H)** der planparallelen Platte **(2)** eine frei vorbestimmbare Höhenrasterung besitzt.

9. Höhenausgleichelement nach Anspruch 8, **dadurch gekennzeichnet, dass** die Höhenrasterung von Höhenausgleichelement zu Höhenausgleichelement in wenigstens 1,5 mm-Schritten für den Trockenbau abgestuft ist.

10. Höhenausgleichelement nach Anspruch 8, **dadurch gekennzeichnet, dass** die Höhenrasterung von Höhenausgleichelement zu Höhenausgleichelement in wenigstens 3,0 mm-Schritten für Dachkonstruktionen abgestuft ist.

11. Höhenausgleichelement nach einem der vorherigen Ansprüche, **dadurch gekennzeichnet, dass** die Höhenausgleichelemente unterschiedlicher Höhenrasterung miteinander zu unterschiedlichen Höhenmaßen kombinierbar sind.

12. Höhenausgleichelement nach einem der vorherigen Ansprüche, **dadurch gekennzeichnet, dass** den Höhenausgleichelementen gleicher Höhenrasterung eine gleiche Grundfarbe zugeordnet ist.

13. Höhenausgleichelement nach einem der vorherigen Ansprüche, **dadurch gekennzeichnet, dass** dieselben aus Kunststoff hoher Festigkeit, vorzugsweise Polyethylen, Polypropylen, Polyamid, oder aus Metall, vorzugsweise Aluminium, oder aus Hartholz bestehen.

14. Höhenausgleichelement nach einem der vorherigen Ansprüche, **dadurch gekennzeichnet, dass** die planparallele Platte **(2)** mindestens zwei Schenkel **(5;6)** besitzt.

15. Höhenausgleichelement nach einem der vorherigen Ansprüche, **dadurch gekennzeichnet, dass** dieselben eine Rechtecks-, Kreis- oder andere Form aufweisen.

## Claims

1. Height-compensating element **(1)**, in particular for wood, metal and building constructions and the like, with a wedge-shaped end section **(3)** of plastic, wood or metal in which is arranged an insert slot **(4)** having on its lower inside edge elastic retaining members **(8)** which are lying opposite each other and jutting out perpendicularly into the insert slot, said wedge-shaped end section is separated into limbs **(5;6)** showing an outwardly directed bevel **(9)** as an isert aid and the top side and the lower side of said section is provided with a formed-in or formed-on guide and retaining pair means, that comprise interfitting guide formations such as ridge **(12;34)** - guiding groove **(15;17;29)** and retaining teeth **(22;31)** - guiding groove **(17;37),** and a recess **(35)** is arranged in said section **(3) characterized in that** a plan-parallel flat plate **(2)** is arranged at wedge-shaped end section **(3),** and that the interfitting guide formations are disposed in or on the parallel flate plate **(2)** so that the elements can be stacked, driven in, and set atop one another, whereby the interfitting guide formations are arranged alternatively at the top side and lower side of the plate **(2),** e.g. ridge **(12;34),** guiding groove **(15;29),** retaining teeth **(22;31)** and retaining teeth **(22;31),** guiding groove **(15;29)** ridge **(12;34)** are alternated at the top side and lower side, and that recesses **(23;35)** with stabilizing webs **(24;25;37)** are arranged in the plan-parallel plate **(2),** and at least two parallel ridges **(40)** lying side by side are disposed to prevent spreading during driving-in or setting.

2. Height-compensating element according to claim 1, **characterized in that** the ridge **(12,34),** guiding groove **(15;29)** and retaining teeth **(22;31)** are arranged on and in the top side as well as on and in the lower side can be exchanged with each other.

3. Height-compensating element according to claim 1 and 2, **characterized in that** arranged on the top side **(10)** of the plate **(2),** close to and along its top outer edge **(11)** and running partially over the top side at least one ridge **(12),** close to and along the other top outer edge **(14)** at least one guiding groove **(15)** completely formed in the top side **(10),** close to and along the inner top edge **(16)** of the limb **(5)** at least one guiding groove **(17)** running through the top side **(10)** with at least one retaining tooth **(19)** disposed therein, and close to and along the other inner top edge **(21)** of the limb **(6)** a row of retaining teeth **(22),** and that arranged on the lower side **(27)** of the height-compensating element **(1)** in place of the ridge **(12)** is a guiding groove **(29),** in place of the guiding groove **(15)** a ridge **(34),** in place of the guiding groove **(17)** a retaining teeth arrangement **(31),** in place of the retaining teeth **(22)** a guiding groove **(37),** in the same position and direction.

4. Height-compensating element according to claim 1 to 3, **characterized in that** the ridges **(40)** on the wedge surface **(13)** of limbs **(5;6)** are of different lengths.

5. Height-compensating element according to one of the preceding claims, **characterized in that** the bevel **(9)** has an opening angle α of 3° to 10°, preferably 5°.

6. Height-compensating element according to one of the preceding claims, **characterised in that** the bevel **(9)** is funnel-shaped.

7. Height-compensating element according to claim 3, **characterised in that** the width (b) of the guiding groove **(15;29)** is somewhat wider than that of the ridge **(12;34)**

8. Height-compensating element according to one of the preceding claims, **characterized in that** the Height (H) of the plan-parallel plate (2) has a freely predeterminable height indexing.

9. Height-compensating element according to claim 8, **characterized in that** the height of the height-compensating element are indexed in steps of at least 1.5 mm for dry construction.

10. Height-compensating element according to claim 8, **characterized in that** the height of the height-compensating element are indexed in steps of least 3.0 mm for roof construction.

11. Height-compensating element according to one of the preceding claims, **characterized in that** the height-compensating elements with different height are indexed at different sizes for different combination heights.

12. Height-compensating element according to one of the preceding claims, **characterized in that** the height-compensating elements of the same size are the same color.

13. Height-compensating element according to one of the preceding claims, **characterized in that** the height-compensating elements are made of a plastic of high strength, preferably of polyethylene, polypropylene, polyamide or of metal, preferably aluminium, or of hard wood.

14. Height-compensating element according to one of the preceding claims, **characterized in that** the plan-parallel plate **(2)** has at least two limbs **(5;6).**

15. Height-compensating element according to one of the preceding claims, **characterised in that** the height-compensating elements display a rectangular, circular, or other shape.

## Revendications

1. Elément de compensation de hauteur (1), en particulier pour des constructions de bois, de métal et de bâtiment et semblable, avec un tronçon à surface en coin (3) en matière plastique, en bois ou en métal qui est percé par une fente d'introduction (4) et qui, sur son arête intérieure inférieure, porte des projections élastiques de retenue (8) qui sont disposées de manière opposée l'une à l'autre de façon à s'étendre verticalement dans la fente d'introduction (4), les branches (5, 6) du tronçon à surface en coin (3) qui limitent la fente d'introduction présentant sur le côté intérieur un biais (9) comme aide à l'introduction qui est ouvert vers l'extérieur, et des moyens de guidage et d'arrêt formés dedans ou bien dessus étant prévus sur la face supérieure et sur la face inférieure du tronçon, lesquels se composent de paires de guidage ajustées l'une à l'autre quant à la position et quant à la forme, telles que languette (12, 34) - rainure de guidage (15, 17, 29) et rangée de dents d'arrêt (22, 31) - rainure de guidage (17, 37), et un creux (35) étant prévu dans le tronçon à surface en coin (3), **caractérisé par le fait que** sur le tronçon à surface en coin (3) existe une plaque plane-parallèle plane (2), et que les moyens de guidage et d'arrêt dans la plaque plane-parallèle (2) sont disposés de telle manière que les éléments peuvent être empilés l'un sur l'autre, enfoncés et ajoutés, pour cela lesdits moyens étant disposés de manière alternante sur la face supérieure et sur la face inférieure de la plaque plane-parallèle (2), c'est-à-dire la languette (12 ; 34), la rainure de guidage (15 ; 29), la rangée de dents d'arrêt (22 ; 31) sur la face supérieure alternent avec la rangée de dents d'arrêt (22 ; 31), la rainure de guidage (15 ; 29), la languette (12 ; 34) sur la face inférieure, et que l'on dispose dans la plaque plane-parallèle (2) des creux (23 ; 35) avec des entretoises stabilisantes (24 ; 25 ; 37) ainsi que sur la surface en coin (13) du tronçon (3) au moins deux languettes (40) situées parallèlement l'une à côté de l'autre, contre un écartement lors de l'enfoncement ou bien lors de l'action d'ajouter.

2. Elément de compensation de hauteur selon la revendication 1, **caractérisé par le fait que** la languette (12 ; 34), la rainure de guidage (15 ; 29) et la rangée de dents d'arrêt (22 ; 31) sur et dans la face supérieure ainsi que sur et dans la face inférieure sont disposées de manière à pouvoir être échangées l'une contre l'autre.

3. Elément de compensation de hauteur selon la revendication 1 et 2, **caractérisé par le fait que**, sur la face supérieure (10) de la plaque (2), on dispose près et le long de son arête extérieure supérieure (11) au moins la languette (12) s'étendant en partie sur la face supérieure, près et le long de l'autre arête extérieure supérieure (14) au moins la rainure de guidage (15) formée complètement dans la surface (10), près et le long de l'arête supérieure intérieure (16) de la branche (5) au moins une rainure de guidage (17) avec au moins une dent d'arrêt (19) disposée là-dedans, ladite rainure (17) s'étendant à travers la face supérieure (10), et près et le long de l'autre arête supérieure intérieure (21) de la branche (6) la rangée de dents d'arrêt (22), et que, sur la face inférieure (27) de l'élément de compensation de hauteur, on dispose au lieu de la languette (12) une rainure de guidage (29), au lieu de la rainure de guidage (15) une languette (34), au lieu de la rainure de guidage (17) une denture d'arrêt (31) et au lieu de la denture d'arrêt (22) une rainure de guidage (37) dans la même position et dans la même direction.

4. Elément de compensation de hauteur selon la revendication 1 à 3, **caractérisé par le fait que** les languettes (40) sur la surface en coin (13) des branches (5 ; 6) sont réalisées de manière à présenter des longueurs différentes.

5. Elément de compensation de hauteur selon l'une des revendications précédentes, **caractérisé par le fait que** le biais (9) présente un angle d'ouverture α compris entre 3 et 10°, de préférence de 5°.

6. Elément de compensation de hauteur selon l'une des revendications précédentes, **caractérisé par le fait que** le biais (9) est réalisé en entonnoir.

7. Elément de compensation de hauteur selon la revendication 3, **caractérisé par le fait que** la largeur (b) de la rainure de guidage (15 ; 29) est un peu plus large que celle de la languette (12 ; 34).

8. Elément de compensation de hauteur selon l'une des revendications précédentes, **caractérisé par le fait que** la hauteur (H) de la plaque plane-parallèle (2) possède une dimension de hauteur qui peut être prédéterminée librement.

9. Elément de compensation de hauteur selon la revendication 8, **caractérisé par le fait que** la dimension de hauteur d'élément de compensation de hauteur en élément de compensation de hauteur est graduée en pas d'au moins 1,5 mm pour la construction sèche.

10. Elément de compensation de hauteur selon la revendication 8, **caractérisé par le fait que** la dimension de hauteur d'élément de compensation de hauteur en élément de compensation de hauteur est graduée en pas d'au moins 3,0 mm pour des constructions de toit.

11. Elément de compensation de hauteur selon l'une des revendications précédentes, **caractérisé par le fait que** les éléments de compensation de hauteur de dimension différente de hauteur peuvent être combinés l'un avec l'autre pour obtenir des mesures différentes de hauteur.

12. Elément de compensation de hauteur selon l'une des revendications précédentes, **caractérisé par le fait que** l'on associe une même couleur de base aux éléments de compensation de hauteur de même dimension de hauteur.

13. Elément de compensation de hauteur selon l'une des revendications précédentes, **caractérisé par le fait qu'**ils se composent de matière plastique de dureté élevée, de préférence de polyéthylène, de polypropylène, de polyamide, ou de métal, de préférence d'aluminium, ou de bois dur.

14. Elément de compensation de hauteur selon l'une des revendications précédentes, **caractérisé par le fait que** la plaque plane-parallèle (2) possède au moins deux branches (5 ; 6).

15. Elément de compensation de hauteur selon l'une des revendications précédentes, **caractérisé par le fait qu'**ils présentent une forme rectangulaire, circulaire ou une autre forme.
